# EUROPÄISCHE PATENTSCHRIFT

(11) **EP 2 435 280 B1**
(45) Veröffentlichungstag und Bekanntmachung des Hinweises auf die Patenterteilung: **11.05.2016**
(21) Anmeldenummer: 10711187.4
(22) Anmeldetag: 17.03.2010
(51) Int. Cl.: B60S 1/04, B60S 1/24, B23K 20/06

(54) **SCHEIBENWISCH-GESTÄNGEEINRICHTUNG, HERSTELLUNGSVERFAHREN DAFÜR SOWIE SCHEI- BENWISCHVORRICHTUNG**
WINDSCREEN WIPER ROD SYSTEM, METHOD FOR THE PRODUCTION THEREOF AND WINDSCREEN WIPER DEVICE
TRINGLERIE D'ESSUIE-GLACE, PROCÉDÉ DE FABRICATION ASSOCIÉ AINSI QUE DISPOSITIF D'ESSUIE-GLACE

(30) Priorität: 08.05.2009 DE 102009002958
(43) Veröffentlichungstag der Anmeldung: 04.04.2012
(73) Patentinhaber: Robert Bosch GmbH, 70442 Stuttgart (DE)
(72) Erfinder: SY, Wiliamson, Shinagawa-ku Tokyo 142-0062 (JP); FUJII, Atsuhiko, 77815 Bühl (DE); PORCIUNCULA, Grace, Ypsilanti 48198 Michigan 1600 (US); CASARI, John, Manchester Michigan 48158 (US); ROEMER, Karsten, Clarkston Michigan 48348 (US); JANISSE, Jerry, Hermosillo 83299 (MX); KANAIZUKA, Hideo, Kawasaki Kanagawa 214-0037 (JP); SANTANDER, Alexander, E-28037 Madrid (ES); ZEISER, Franz, Bosch Corporation 224-8501 (JP); MARTIN, Pascal, Commerce Township Michigan 48382 (US)
(86) Internationale Anmeldenummer: PCT/EP2010/053424
(87) Internationale Veröffentlichungsnummer: WO 2010/127896

(56) Entgegenhaltungen:
- EP-A1- 0 704 356
- EP-A1- 1 190 920
- DE-A1- 19 636 871
- DE-A1-102006 058 740
- FR-A1- 2 640 211
- US-A- 5 966 813
- US-A1- 2005 116 011

## Beschreibung

Die Erfindung betrifft eine Scheibenwisch-Gestängeeinrichtung und ein Verfahren zum Herstellen einer Scheibenwisch-Gestängeeinrichtung, für eine Scheibenwischvorrichtung eines Fortbewegungsmittels, insbesondere eines Kraftfahrzeugs. Ferner betrifft die Erfindung eine Scheibenwischvorrichtung insbesondere für eine Windschutzscheibe eines Kraftfahrzeugs, mit einer erfindungsgemäßen Scheibenwisch-Gestängeeinrichtung bzw. einer erfindungsgemäß hergestellten Scheibenwisch-Gestängeeinrichtung.

### Stand der Technik

Eine Vielzahl von Gestängeeinrichtungen für Scheibenwischvorrichtungen besitzen einen rohrförmigen Träger zwischen den Lagereinrichtungen, für ein Übertragungsgestänge, und/oder an einem Antriebsmotor. Hierbei sind die Lagereinrichtungen und ein Gehäuse des Antriebsmotors bevorzugt aus einem Aluminium-Werkstoff und der rohrförmige Träger aus einem Stahl-Werkstoff hergestellt. Eine mechanische Verbindung innerhalb der Scheibenwisch-Gestängeeinrichtung zwischen dem rohrförmigen Träger und z. B. einem Montagezapfen einer Lagereinrichtung erfolgt im Stand der Technik mittels einer Crimpung, wobei der rohrförmige Träger auf im Montagezapfen vorgesehene Crimpkerben gecrimpt wird. Solche Crimpkerben benötigen enge Toleranzen, um später eine ordnungsgemäße Crimpung sicherzustellen, und schwächen darüber hinaus den Montagezapfen, da diese tief in den Montagezapfen hineingehend vorgesehen sein müssen. Die engen Toleranzen der Crimpkerben machen eine solche Crimpverbindung vergleichsweise teuer, und die Crimpkerben erfordern vergleichsweise vergleichsweise große Abmessungen des Montagezapfens und somit auch des Trägers zumindest in dessen Verbindungsabschnitt, um eine mechanisch ausreichend stabile Gestängeeinrichtung zu erhalten, was den Träger zusätzlich strukturell schwächt. Der Antriebsmotor bzw. dessen Gehäuse ist dabei bevorzugt an den rohrförmigen Träger geklemmt.

Eine Scheibenwisch-Gestängevorrichtung mit den Merkmalen des Oberbegriffs ist beispielsweise aus der DE 10 2006 058 740 A1 bekannt.

### Aufgabenstellung

Es ist eine Aufgabe der Erfindung, eine verbesserte Gestängeeinrichtung für eine Scheibenwischvorrichtung eines Fortbewegungsmittels, insbesondere eines Kraftfahrzeugs, anzugeben. Eine mechanische Verbindung zwischen zwei Komponenten der Gestängeeinrichtung soll dabei einfach aufgebaut sein und bei kleinen Abmessungen robust und kostengünstig eingerichtet werden können. Dies betrifft insbesondere die mechanische Verbindung zwischen einem bevorzugt rohrförmigen Träger und einer Lagereinrichtung und/oder einem Antriebsmotor der Scheibenwischvorrichtung.

### Offenbarung der Erfindung

Die Aufgabe der Erfindung wird mittels einer Scheibenwisch-Gestängeeinrichtung für eine Scheibenwischvorrichtung eines Fortbewegungsmittels, insbesondere eines Kraftfahrzeugs, gemäß Anspruch 1 und eine Scheibenwischvorrichtung, insbesondere für eine Windschutzscheibe eines Kraftfahrzeugs, gemäß Anspruch 5 gelöst. Vorteilhafte Weiterbildungen der Erfindung ergeben sich aus den abhängigen Ansprüchen.

Bei der erfindungemäßen Scheibenwisch-Gestängeeinrichtung weist diese wenigstens zwei Komponenten auf. Bevorzugt sind dies ein Träger, der bevorzugt in wenigstens einem betreffenden Verbindungsabschnitt rohr- oder zapfenförmig aufgebaut ist, und eine Lagereinrichtung, insbesondere ein festgelegtes Wischerlager oder eine festgelegte Schubstangen-Lagereinrichtung, und/oder ein Antriebsmotor. Erfindungemäß sind bzw. werden zwei Komponenten der Scheibenwisch-Gestängeeinrichtung über eine stoffschlüssige Verbindung aneinander festgelegt. Analoges gilt für die Verbindung aneinander festgelegt. Analoges gilt für die erfindungemäße Scheibenwischvorrichtung, die Wischerblätter aufweisen kann oder nicht

In einer Ausführungsform ist die stoffschlüssige Verbindung der Komponenten eine Schweißverbindung, die eine metallurgische Verbindung bzw. eine Metallverbindung der Komponenten in ihren jeweiligen Verbindungsabschnitten sein kann. Die stoffschlüssige Verbindung ist durch Magnetimpulsschweißen oder elektromagnetisches Umformen hergestellt. Eine Komponente oder, zwei oder mehr Komponenten der stoffschlüssigen Verbindung kann bzw. können einen Leichtmetall-Werkstoff, insbesondere einen Aluminium-Werkstoff, oder einen Stahl-Werkstoff aufweisen. Eine Kombination von Leichtmetall-Werkstoff und Stahl-Werkstoff ist anwendbar.

Die Komponenten sind in einem Verbindungsabschnitt bevorzugt direkt zueinander benachbart angeordnet. Hierbei kann eine der Komponenten in ihrem Verbindungsabschnitt rohrförmig und eine andere Komponente in ihrem Verbindungsabschnitt zapfen- oder ebenfalls rohrförmig ausgebildet sein, bevorzugt ist hierbei ein Montagezapfen. Ferner kann eine Komponente oder können beide Komponenten in ihrem Verbindungsabschnitt aus einem Vollmaterial bestehen. Falls dabei nur ein Verbindungsabschnitt aus Vollmaterial besteht, so ist dieser bevorzugt zylindrisch oder konisch ausgebildet. Sind zwei Verbindungsabschnitte aus Vollmaterial aufgebaut, so sind diese bevorzugt über eine als Montagehülse ausgebildete Montageeinrichtung, über jeweils einen mit der Montageeinrichtung gemeinsamen Verbindungsabschnitt nebeneinander liegend aneinander festgelegt.

Die erfindungsgemäße stoffschlüssige Verbindung zwischen wenigstens zwei Komponenten einer Scheibenwisch-Gestängeeinrichtung benötigt keine Crimpkerben an einem betreffenden Verbindungsabschnitt, welcher, auch bei kleineren Gesamtabmessungen als im Stand der Technik, eine größere Übertragungsfläche für mechanische Kräfte besitzt, da die Übertragungsfläche nun erfindungsgemäß vollständig genutzt werden kann. Neben den Crimpkerben entfallen natürlich auch die für die Crimpkerben benötigen engen Toleranzen. Der erfindungsgemäße Stoffschluss bei Anwendung eines Magnetimpuls-Schweißverfahrens oder eines elektromagnetischen Umformverfahrens, erzielt auch bei kleinen Abmessungen der beteiligten Verbindungsabschnitte, eine starke und dauerfest haltbare Komponentenverbindung bei geringeren Kosten. Ferner ergeben sich geringere Herstellungszeiten, da lediglich der Stoffschluss zwischen den Komponenten eingerichtet werden muss.

### Kurzbeschreibung der Figuren

Die Erfindung wird im Folgenden anhand von Ausführungsbeispielen unter Bezugnahme auf die beigefügte Zeichnung näher erläutert. In der Zeichnung zeigen:
- Fig. 1: in einer perspektivischen Darstellung eine Scheibenwischvorrichtung gemäß dem Stand der Technik, für eine Windschutzscheibe eines Kraftfahrzeugs;
- Fig. 2: in einer zweidimensionalen Schnittansicht eine mechanische Verbindung zweier Komponenten einer Scheibenwischvorrichtung gemäß dem Stand der Technik;
- Fig. 3: in einer zweidimensionalen Schnittansicht eine erste Ausführungsform einer mechanischen Verbindung zweier Komponenten einer Scheibenwischvorrichtung;
- Fig. 4: in einer zweidimensionalen Schnittansicht eine erste Ausführungsform einer erfindungsgemäßen mechanischen Verbindung von drei Komponenten der erfindungsgemäßen Scheibenwischvorrichtung; und
- Fig. 5: ebenfalls in einer zweidimensionalen Schnittansicht eine Alternative zur erste Ausführungsform der Erfindung aus Fig. 4.

### Ausführungsformen der Erfindung

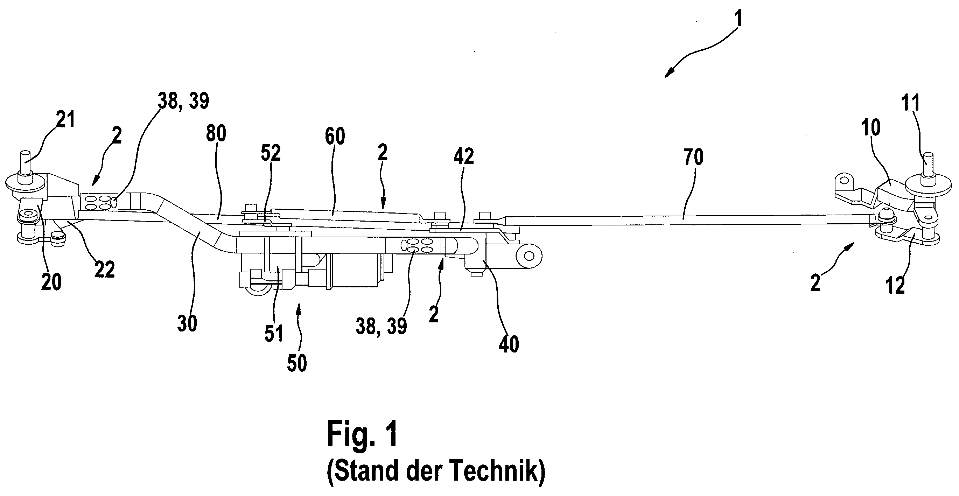

Die in Fig. 1 dargestellte Scheibenwischvorrichtung 1 umfasst eine Mehrzahl von Scheibenwisch-Gestängeeinrichtungen 2, nachfolgend als Gestängeeinrichtung 2 bezeichnet, wobei in jeder Gestängeeinrichtung 2 wenigstens zwei Komponenten 10, 20, 30, 40, 50, 60, 70, 80 der Scheibenwischvorrichtung 1 zusammengefasst sind. Eine bevorzugt zentrale Komponente 30 der Scheibenwischvorrichtung 1 ist ein insbesondere rohrförmiger und den Gegebenheiten des betreffenden Kraftfahrzeugs entsprechend angepasster Träger 30, mittels welchem die anderen Komponenten 10, 20, 40, 50, 60, 70, 80 gehaltert bzw. an diesen mechanisch angebunden sind.

Im vorliegenden Ausführungsbeispiel ist an einem Längsendabschnitt 34 des Trägers 30 eine Lagereinrichtung 20, insbesondere ein innerhalb des Kraftfahrzeugs festlegbares erstes Wischerlager 20, und an einem diesen gegenüberliegenden Längsendabschnitt 34 eine Lagereinrichtung 40, insbesondere eine innerhalb des Kraftfahrzeugs festlegbare Schubstangen-Lagereinrichtung 40, festgelegt. In einem Mittelabschnitt des Trägers 30 ist ein elektrischer Antriebsmotor 50 an diesen mittels eines Halters geklemmt. Eine Lagereinrichtung 10, die bevorzugt ebenfalls als ein innerhalb des Kraftfahrzeugs festlegbares zweites Wischerlager 10 ausgebildet ist, ist der Lagereinrichtung 20 an einem gegenüberliegenden Ende der Scheibenwischvorrichtung 1 vorgesehen. Im vorliegenden Ausführungsbeispiel ist diese Lagereinrichtung 10 nicht direkt mit dem Träger 30 verbunden, sondern wird ausschließlich an einer Karosserie des Kraftfahrzeugs festgelegt. Andere Ausführungsformen, z. B. eine solche bei der die Lagereinrichtung 10 am Träger 30 festgelegt ist, sind natürlich anwendbar. Es ist bevorzugt, dass wenigstens eine, bevorzugt jedoch zwei oder drei der Lagereinrichtungen 10, 20, 40 auch direkt an der Karosserie des Kraftfahrzeugs festgelegt werden können.

Der ggf. mit einem Getriebe versehene, am Träger 30 montierte elektrische Antriebsmotor 50 treibt in seinem Betrieb eine Abtriebskurbel 52 an, welche über eine Schubstange 60 eine auf der Schubstangen-Lagereinrichtung 40 dreh- oder schwenkbar gelagerte Koppelschwinge 42 zu einer pendelnden Bewegung antreibt. Auf der Koppelschwinge 42 sind zwei Schubstangen 70, 80 montiert, die in voneinander wegweisende Richtungen jeweils eine Antriebsschwinge 12, 22 einer Wischerwelle 11, 21 eines betreffenden Wischerlagers 10, 20 pendelnd antreiben. Die Schubstangen 60, 70, 80 zusammen mit der Abtriebskurbel 52, der Koppelschwinge 42 und den Antriebsschwingen 12, 22 bilden dabei ein Übertragungsgestänge für die Scheibenwischvorrichtung 1. Auf der jeweiligen Wischerwelle 10, 20 ist ein Scheibenwischer (in der Zeichnung nicht dargestellt) montierbar.

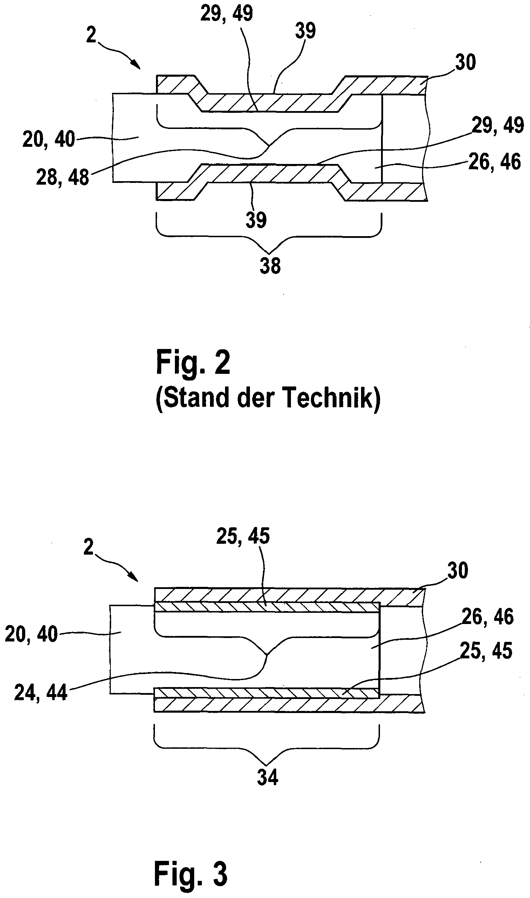

Eine mechanische Verbindung der Lagereinrichtungen 20, 40 mit dem Träger 30 erfolgt im Stand der Technik mittels jeweils einer Crimpung 39 in einem betreffenden Crimpabschnitt 38 des Trägers 30. Siehe hierzu auch die Fig. 2. Hierbei wird der Träger 30 mit seinem Crimpabschnitt 38 auf einen Montagezapfen 26, 46, der Lagereinrichtung 20, 40 gecrimpt. Für eine Montage des Trägers 30 weist der Montagezapfen 26, 46 einen Crimpabschnitt 28, 48 auf, der in den Montagezapfen 26, 46 radial hineingehende Crimpkerben 29, 49 besitzt. Ist der Träger 30 mit seinem Längsendabschnitt 34 auf den Montagezapfen 26, 46 gesteckt, so werden mittels eines Crimpwerkzeugs (in der Zeichnung nicht dargestellt) Bereiche des Crimpabschnitts 38 des Trägers 30 in die Crimpkerben 29, 49 des Montagezapfens 26, 46 unter einer plastischen Verformung dieser Bereiche hineingequetscht.

Gemäß der Erfindung soll eine alternative Verbindung zweier Komponenten 10, 20, 30, 40, 50, 60, 70, 80, 90 (Gestängeeinrichtung 2) der Scheibenwischvorrichtung 1, insbesondere des Trägers 30 mit einer Lagereinrichtung 10, 20, 40 und/ oder einem elektrischen Antriebsmotor 50 bzw. dessen Gehäuse 51 zur Verfügung gestellt werden. Ein direktes Schweißverfahren, wie ein z. B. Widerstands-Schweißverfahen eignet sich hierfür nicht, da der Träger 30 meist aus einem Stahl-Werkstoff und die Lagereinrichtung 10, 20, 40 bzw. ein entsprechender Montageabschnitt des Antriebsmotors 50 aus einem Aluminium-Werkstoff gefertigt ist und sich diese beiden Materialien derart nicht verschweißen lassen. Darüber hinaus ist eine zu verschweißende Fläche bei einer Steckverbindung zwischen dem Träger 30 und der Lagereinrichtung 10, 20, 40 bzw. dem Antriebsmotor 50 zu klein. Ein indirektes Verfahren, wie z. B. Hartlöten eignet sich ebenfalls nicht, da das Hartlot einen deutlich geringeren Schmelzpunkt aufweisen muss als die beteiligten Werkstoffe, was zu einer reduzierten Festigkeit der Verbindung führt. Darüber hinaus ist die Anwendung dieses Verfahrens auf vorliegenden Gegenstand zu kostenintensiv.

Diese Nachteile werden mittels einer stoffschlüssigen Verbindung aufgrund Adhäsions- und/oder Kohäsionskräften vermieden, die insbesondere durch ein Magnetimpuls-Schweißverfahren oder ein elektromagnetisches Umformverfahren hergestellt wird bzw. herstellbar ist. Ein für diese Verfahren zur Verfügung stehender Schweißbereich ist vergleichsweise groß, wodurch eine stabile Schweißverbindung entsteht; der Herstellungsprozess ist schnell und kostengünstig; und mit einer guten mechanischen Stabilität der beteiligten Komponenten sowie der stabilen Schweißverbindung ergibt sich eine belastbare, stabile und dauerfeste mechanische Verbindung. Eine solche Verbindung ist in den Fig. 3 bis 5 dargestellt.

Die Fig. 3 zeigt eine Ausführungsform einer stoffschlüssigen Verbindung 25, 45 des ersten Wischerlagers 20 bzw. der Schubstangen-Lagereinrichtung 40 mit dem Träger 30, an dessen Längsendabschnitten 34, wobei sich eine metallische Verbindung 25, 45 aus den beteiligten Werkstoffen, vorliegend einem Aluminium-Werkstoff und einem Stahl-Werkstoff, ausgebildet hat. Die Erfindung kann jedoch auf sämtliche Komponenten 10, 20, 30, 40, 50, 60, 70, 80, 90 der Scheibenwischvorrichtung 1, insbesondere auch auf eine Verbindung des Antriebsmotors 50 mit dem Träger 30, angewendet werden.

Hierbei ist eine Montageeinrichtung 26, 46, insbesondere ein bevorzugt zylinderförmiger Montagezapfen 26, 46 des ersten Wischerlagers 20 bzw. der Schubstangen-Lagereinrichtung 40, welcher aus einem Vollmaterial besteht, mit seinem Verbindungsabschnitt 24, 44 in einen rohrförmigen Verbindungsabschnitt 34 des Trägers 30 eingesteckt. Zwischen dem Verbindungsabschnitt 24, 44 des ersten Wischerlagers 20 bzw. der Schubstangen-Lagereinrichtung 40, und dem Verbindungsabschnitt 34 des Trägers 30 wird bevorzugt durch ein kaltes Fügeverfahren wie z. B. ein Magnetimpuls-Schweißverfahren oder ein elektromagnetisches Umformverfahren, die stoffschlüssige Verbindung 25 ausgebildet, die eine Schweißverbindung 25 bzw. eine metallurgische Verbindung 25 ist.

Der Verbindungsabschnitt 24, 44 des Montagezapfens 26, 46 bzw. der Verbindungsabschnitt 34 des Trägers 30 können auch eine andere Form, z. B. eine Konusform, besitzen. Es ist lediglich darauf zu achten, dass dort, wo der Montagezapfen 26, 46 mit dem Träger 30 verbunden wird, über einen gewünschten Schweißbereich hinweg, ein gewisser Mindestabstand bzw. ein gewisses Spaltmaß existiert, damit das Magnetimpuls-Schweißverfahren oder das elektromagnetische Umformverfahren angewendet werden kann. Ferner ist es möglich, nicht ineinander gesteckte, also z. B. übereinander angeordnete Abschnitte mittels eines solchen Verfahrens stoffschlüssig zu verbinden.

Bei der erfindungsgemäßen Anwendung des Magnetimpuls-Schweißverfahrens wird eine Wand des Verbindungsabschnitts 34 des Trägers 30 radial nach innen auf den Verbindungsabschnitt 24, 44 des Montagezapfens 26, 46 derart stark beschleunigt, dass sich in einem gemeinsamen Bereich eine metallurgische Verbindung 25 zwischen den Werkstoffen des Trägers 30 und des Montagezapfens 26, 46 aufgrund von gegenseitiger Adhäsion und Diffusion ausbildet. Durch die entstehende flächige Verbindung können auftretende Kräfte nahezu optimal übertragen werden. Dies gilt für eine Axial-, eine Biege-, eine Torsions- oder auch eine zusammengesetzte mechanische Beanspruchung.

Beim Magnetimpuls-Schweißverfahren werden die ineinander gesteckten Verbindungsabschnitte 34; 24, 44 in einer geeigneten Spulenanordnung (in der Zeichnung nicht dargestellt) untergebracht. Durch ein kurzeitiges Anlegen eines hohen elektrischen Stroms an der Spulenanordnung wird ein starkes Magnetfeld erzeugt. Dieses sich auf- und wieder abbauende Magnetfeld induziert in der Wand des äußern Verbindungsabschnitts 34 einen starken Strom, der seinerseits wiederum ein starkes Magnetfeld hervorruft, das die Wand des Verbindungsabschnitts 34 des Trägers 30 schlagartig auf den Verbindungsabschnitt 24, 44 der Lagereinrichtung 20, 40 radial zubewegt. Hierbei kommt es zu einem gegenseitigen Durchdringen der beteiligten Werkstoffe, wobei ein Schweißbereich zwischen den Verbindungsabschnitten 34; 24, 44 entsteht.

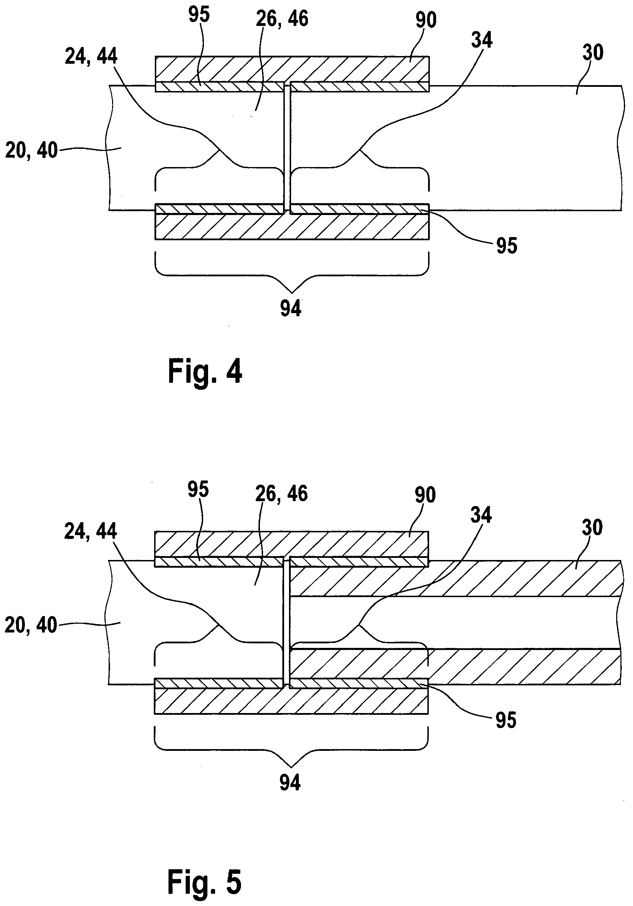

Die Fig. 4 und 5 zeigen zwei Alternativen einer ersten Ausführungsform der Erfindung, wobei zwei Komponenten 30; 20, 40 der Scheibenwischvorrichtung 1 mithilfe einer Montagevorrichtung 90 bzw. einer Komponente 90 aneinander erfindungsgemäß festgelegt sind (Drei-Komponenten-Verbindung). Bevorzugt weist dabei die Montagevorrichtung 90 eine Montagehülse 90 auf oder ist als solche ausgebildet. Ferner ist es dabei bevorzugt, dass eine der beiden Komponenten 30; 20, 40 ein Abschnitt der Karosserie des Kraftfahrzeugs ist. Selbstverständlich ist es möglich, diese zweite Ausführungsform auf eine mechanische Verbindung anderer Komponenten 10, 20, 30, 40, 50, 60, 70, 80 der Scheibenwischvorrichtung 1 anzuwenden.

In Fig. 4 sind mithilfe der Montagevorrichtung 90 zwei Verbindungsabschnitte 34; 24, 44 aus Vollmaterial zweier Komponenten 30; 20, 40 nebeneinander liegend festgelegt. Hierbei liegen die beiden Komponenten 30; 20, 40 mit ihren jeweiligen freien Enden aneinander an oder sind mit einem geringen Abstand zueinander benachbart im Wesentlichen koaxial liegend vorgesehen. Über den beiden Verbindungsabschnitten 34; 24, 44 ist die Montagevorrichtung 90 mit ihrem Montageabschnitt 94 ebenfalls koaxial vorgesehen. Hierdurch ergeben sich zwei nebeneinander liegende jeweils gemeinsame Verbindungsabschnitte 34; 94 - 24, 44; 94 zwischen den Komponenten 30; 20, 40; 90, in welchen die Gestängeeinrichtung 2 wie oben erläutert stoffschlüssig aneinander festgelegt sind. Fig. 5 zeigt eine Alternative zu Fig. 4, wobei die Komponente 30 wenigstens in ihrem Verbindungsabschnitt rohrförmig ausgebildet ist. In einer weiteren Alternative können natürlich auch beide Komponenten 30; 20, 40 bzw. alle drei Komponenten 30; 20, 40; 90 rohrförmig ausgebildet sein.

Ein Vorteil der ersten Ausführungsform der Erfindung ist, dass gegenüber einer Zwei-Komponenten-Verbindung nach Fig. 3, die Komponente 30 bei gleicher Festigkeit mit einem geringeren Materialaufwand und einem geringeren Platzverbrauch realisierbar ist bzw. die Komponente 30 widerstandsfähiger ausgelegt werden kann, was insbesondere in der Fig. 4 dargestellt ist. Ferner ist es hierdurch möglich, die Montageeinrichtung 36 des Trägers 30 zapfenförmig auszubilden.

## Patentansprüche

1. Scheibenwisch-Gestängeeinrichtung für eine Scheibenwischvorrichtung (1) eines Fortbewegungsmittels, insbesondere eines Kraftfahrzeugs, mit einer Mehrzahl von Komponenten (30; 20, 40; 90), wobei die erste Komponente eine Lagereinrichtung (20, 40), insbesondere ein festlegbares Wischerlager (20) oder eine festlegbare Schubstangen-Lagereinrichtung (40), oder ein Antriebsmotor (50), die zweite Komponente (30) ein Träger (30) ist, wobei
eine Komponente (30; 20, 40; 90) einen Leichtmetall-Werkstoff, insbesondere einen Aluminium-Werkstoff, und/oder eine andere Komponente (30; 20, 40; 90) einen Stahl-Werkstoff aufweist, **dadurch gekennzeichnet**
**dass** eine stoffschlüssige Verbindung (25, 45, 95) der Komponenten (30; 20, 40; 90) eine metallurgische Verbindung (25, 45, 95) der Komponenten (30; 20, 40; 90) ist, **dadurch gekennzeichnet daß** die Verbindung durch Magnetimpulsschweißen oder elektromagnetisches Umformen hergestellt ist und,
dass die Komponenten (30; 20, 40; 90) in einem Verbindungsabschnitt (94) benachbart zueinander vorgesehen sind, und
dass eine dritte Komponente eine Montagehülse (90) ist.

2. Scheibenwisch-Gestängeeinrichtung gemäß Anspruch 1, **dadurch gekennzeichnet, dass** eine Komponente (30; 90) in ihrem Verbindungsabschnitt (34, 94) rohrförmig und eine andere Komponente (20, 40) in ihrem Verbindungsabschnitt (24, 44) zapfen- oder ebenfalls rohrförmig (34) ausgebildet ist.

3. Scheibenwisch-Gestängeeinrichtung gemäß einem der Ansprüche 1 bis 2, **dadurch gekennzeichnet, dass** eine Komponente (20, 30, 40) in ihrem Verbindungsabschnitt (24, 34, 44) aus Vollmaterial besteht und bevorzugt zylindrisch oder konisch ausgebildet ist.

4. Scheibenwischvorrichtung für ein Fortbewegungsmittel, insbesondere für eine Windschutzscheibe eines Kraftfahrzeugs, **dadurch gekennzeichnet, dass** eine Scheibenwisch-Gestängeeinrichtung (2) der Scheibenwischvorrichtung (1) nach einem der Ansprüche 1 bis 4 ist.

## Claims

1. Windscreen wiper rod system for a windscreen wiper device (1) of a means of transportation, in particular a motor vehicle, with a plurality of components (30; 20, 40; 90), wherein the first component is a bearing system (20, 40), in particular a fixable wiper bearing (20) or a fixable slide-rod bearing system (40), or a driving motor (50), and the second component (30) is a support (30), wherein one component (30; 20, 40; 90) has a light metal material, in particular an aluminium material, and/or another component (30; 20, 40; 90) has a steel material, **characterized in that** an integrally bonded connection (25, 45, 95) of the components (30; 20, 40; 90) is a metallurgical connection (25, 45, 95) of the components (30; 20, 40; 90), **characterized in that** the connection is produced by magnetic pulse welding or electromagnetic forming, and **in that** the components (30; 20, 40; 90) are provided adjacent to one another in a connecting section (94), and a third component is an installation sleeve (90).

2. Windscreen wiper rod system according to Claim 1, **characterized in that** one component (30; 90) is of tubular design in the connecting section (34, 94) thereof and another component (20, 40) is of pin-shaped or likewise tubular design (34) in the connecting section (24, 44) thereof.

3. Windscreen wiper rod system according to either of Claims 1 and 2, **characterized in that** a component (20, 30, 40) is composed of solid material in the connecting section (24, 34, 44) thereof and is preferably of cylindrical or conical design.

4. Windscreen wiper rod device for a means of transportation, in particular for a windscreen of a motor vehicle, **characterized in that** a windscreen wiper rod system (2) of the windscreen wiper device (1) is according to one of Claims 1 to 4.

## Revendications

1. Tringlerie d'essuie-glace pour un dispositif d'essuie-glace (1) d'un moyen de transport, en particulier d'un véhicule automobile, comprenant une pluralité de composants (30 ; 20, 40 ; 90), le premier composant étant un dispositif de palier (20, 40), en particulier un palier d'essuie-glace pouvant être fixé (20) ou un dispositif de palier-tige de poussée pouvant être fixé (40), ou un moteur d'entraînement (50), le deuxième composant (30) étant un support (30), un composant (30 ; 20, 40 ; 90) présentant un matériau en métal léger, en particulier un matériau en aluminium, et/ou un autre composant (30 ; 20, 40 ; 90) présentant un matériau en acier, **caractérisé en ce qu'**un assemblage par engagement par liaison de matière (25, 45, 95) des composants (30 ; 20, 40 ; 90) est un assemblage métallurgique (25, 45, 95) des composants (30 ; 20, 40 ; 90), **caractérisée en ce que** l'assemblage est réalisé par soudage par impulsions magnétiques ou par formage électromagnétique et **en ce que** les composants (30 ; 20, 40 ; 90) sont prévus en position adjacente les uns aux autres dans une portion d'assemblage (94), et **en ce qu'**un troisième composant est une douille de montage (90).

2. Tringlerie d'essuie-glace selon la revendication 1, **caractérisée en ce qu'**un composant (30 ; 90) est réalisé sous forme tubulaire dans sa portion d'assemblage (34, 94) et un autre composant (20, 40) est réalisé sous forme de tourillon ou également sous forme tubulaire (34) dans sa portion d'assemblage (24, 44).

3. Tringlerie d'essuie-glace selon l'une des revendications 1 et 2, **caractérisée en ce qu'**un composant (20, 30, 40) se compose d'un matériau plein dans sa portion d'assemblage (24, 34, 44) et est réalisé de préférence sous forme cylindrique ou conique.

4. Dispositif d'essuie-glace pour moyen de transport, en particulier pour un pare-brise d'un véhicule automobile, **caractérisé en ce qu'**une tringlerie d'essuie-glace (2) du dispositif d'essuie-glace (1) est selon l'une quelconque des revendications 1 à 4.
